## Europäisches Patentamt
## European Patent Office
## Office européen des brevets

(11) Publication number: **0 048 563**
**B1**

# EUROPEAN PATENT SPECIFICATION

(45) Date of publication of patent specification: **20.08.86**

(21) Application number: **81304065.6**

(22) Date of filing: **07.09.81**

(51) Int. Cl.⁴: **F 16 D 13/46,** F 16 D 13/50, F 16 D 13/71

(54) **Friction clutch assembly.**

(30) Priority: **18.09.80 IT 2473680**

(43) Date of publication of application:
**31.03.82 Bulletin 82/13**

(45) Publication of the grant of the patent:
**20.08.86 Bulletin 86/34**

(84) Designated Contracting States:
**DE FR GB SE**

(56) References cited:
**FR-A-2 131 731**
**GB-A-1 128 543**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Cucinotta, Luigi**
**Via Medi 4**
**Castelbellino Ancona (IT)**
Inventor: **Bambini, Luigi**
**Via Mettei 8**
**Castelbellino Ancona (IT)**

Courier Press, Leamington Spa, England.

## Description

The invention relates to friction clutch assemblies of the kind comprising a cover for fastening to a flywheel, a pressure plate drivingly connected to the cover and a diaphragm spring acting between the cover and the pressure plate to urge the pressure plate towards the flywheel and, in use, to grip a driven plate interposed between the flywheel and the pressure plate.

Friction clutches of this kind are known for example from GB—A—1128543 and FR—A—2131731.

In GB—A—1128543, the pressure plate also has means for receiving a release load which acts in opposition to the load of the diaphragm spring to move the pressure plate away from the flywheel to release the driven plate. In FR—A—2131731 the diaphragm spring is of the kind comprising an outer Belleville spring portion and spring fingers which project radially inwards from the Belleville portion. These fingers are used in effect as release levers in that thrust receiving means acts on the fingers to release the load of the diaphragm spring.

Clutch arrangements such as that of GB—A—1128543 are suited to engine and gearbox arrangements in which a pushrod for clutch release extends through the gearbox input shaft. However, when such an arrangement is used in relatively small numbers, for motorcycles for example, those parts which require expensive tooling for their manufacture are in themselves expensive because the tooling costs cannot be spread out sufficiently.

For this reason it would be desirable to make use of a diaphragm spring of conventional type incorporating not only a Belleville portion as known from GB—A—1128543 but also spring fingers which project radially inwards from the Belleville portion. Such a spring is employed in FR—A—2131731 but the thrust means for receiving a release load acts on the inner end of the fingers instead of acting directly on the pressure plate thereby detracting from positive direct release of the clutch.

An object of the present invention is to provide a diaphragm spring clutch of the kind referred to in which diaphragm spring with inwardly directed spring fingers can be used in conjunction with thrust receiving means through which a release load acts directly on the pressure plate.

According to the present invention a friction clutch assembly comprising a cover for fastening to a flywheel, a pressure plate drivingly connected to the cover and a diaphragm spring acting between the cover and the pressure plate to urge the pressure plate towards the flywheel and, in use, to grip a driven plate interposed between the flywheel and the pressure plate, the pressure plate having thrust receiving means for receiving a release load which acts in opposition to the load of the diaphragm spring to move the pressure plate away from the flywheel to release the driven plate, the diaphragm spring being the kind comprising an outer Belleville spring portion acd spring fingers which project radially inwards from Belleville portion is characterised in that the diaphragm spring applies its load to the pressure plate adjacent to the radially inner ends of the spring fingers and reacts its load onto the cover adjacent to the radially inner margin of the Belleville spring portion.

Conveniently the cover has mounting means adjacent to a central aperture for attachment to an input shaft, for example an engine crankshaft. This arrangement allows the use of a pressed cover which is common to pressed covers used for conventional diaphragm spring clutches for many of the press operations. Furthermore, the arrangement allows the connecting parts of the diaphragm spring to the cover to be the same as those used for conventional diaphragm spring clutches.

One embodiment of the invention will now be described by way of example and with reference to the accompanying drawings, in which:—

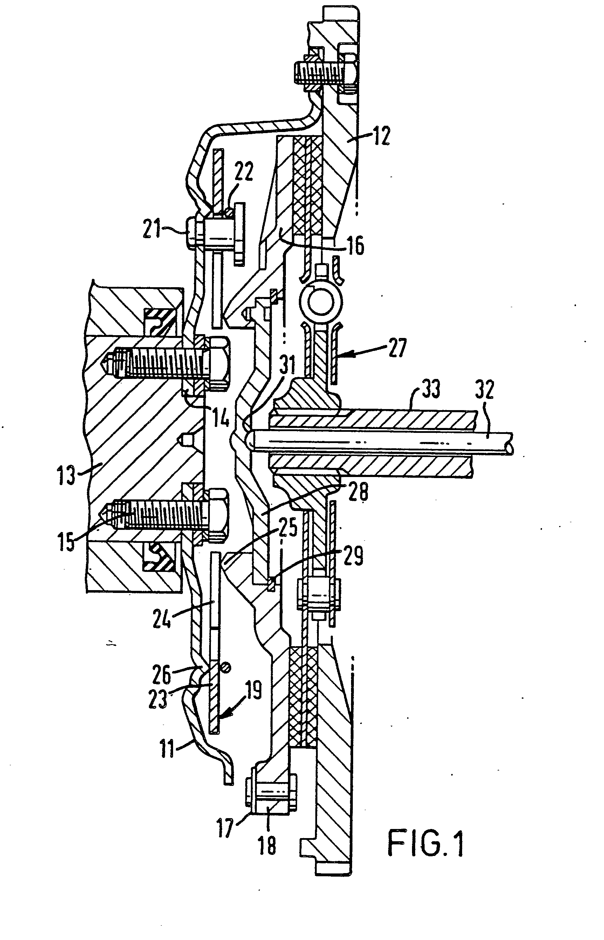

Fig. 1 is a cross-section of a clutch assembly according to the invention; and

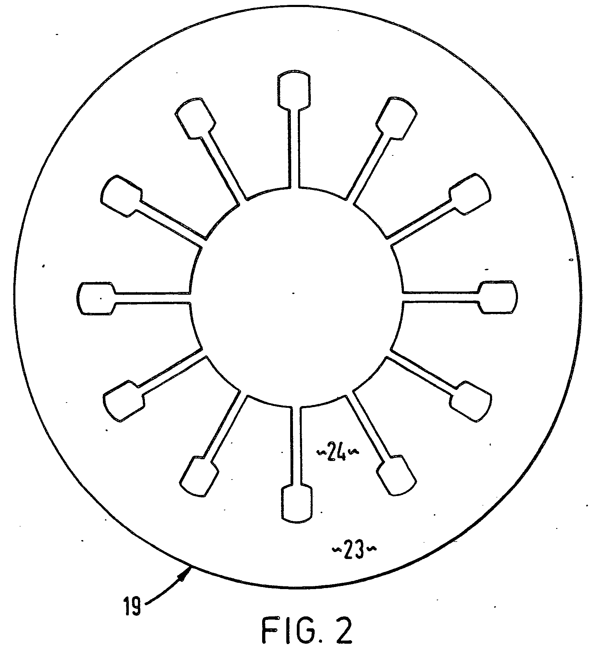

Fig. 2 is an elevation of a diaphragm spring shown in Fig. 1.

Referring to the drawings, a friction clutch assembly includes a cover 11 which is fastened to a flywheel 12 by means of setscrews and captive nuts. The cover 11 has a central aperture which is spigotted to an engine crankshaft 13. Mounting means in the form of an inner peripheral flange 14 on the cover 11 adjacent to the central aperture allow the cover to be attached to the crankshaft 13 by setscrews 15.

A pressure plate 16 is drivingly connected to the cover 11 by three tangential straps 17 rivetted to lugs 18 on the pressure plate and to outer flange portions of the cover. A diaphragm spring 19 urges the pressure plate towards the flywheel 12, being located on the cover 11 by six circumferentially spaced rivets 21 and a wire fulcrum ring 22. The diaphragm spring 19 is of the kind having an outer Belleville spring portion 23 and spring fingers 24 which project radially inwards from the Belleville portion.

The load of the diaphragm spring 19 is applied to a circular fulcrum rib 25 on the pressure plate adjacent to the radially inner ends of the spring fingers 24 and is reacted onto an interrupted circular fulcrum rib 26 pressed into the cover 11 adjacent to the radially inner margin of the Belleville spring portion 23.

A driven plate 27 is interposed between the flywheel 12 and the pressure plate 16 and is clamped by the load of the diaphragm spring 19. The pressure plate 16 has a central aperture including a recess in which a thrust plate 28 is releasibly retained by a circlip 29. A depression 31 in the centre of the thrust plate 28 is for receiving the end of a pushrod 32 which in the intended application passes through a gearbox input shaft 33 which is driven by the driven plate 27.

A thrust applied to the thrust plate 28 by the pushrod 32 pushes the pressure plate 16 away from the flywheel 12 against the load of the diaphragm spring 19 to release the driven plate 27.

The cover 11, diaphragm spring 19 and pressure plate 16 are assembled together and can be fitted to the crankshaft 13 as a complete assembly, allowing the thrust plate 28 and its retaining circlip 29, the driven plate 27 and the flywheel 12 to be fitted subsequently.

The cover pressing 11 is conveniently similar to one used for conventional diaphragm spring clutches in which the flywheel is bolted to the engine crankshaft and the diaphragm spring acts on the cover adjacent to the radially outer margin of the Belleville spring portion. In such clutches a release bearing acts on the spring fingers adjacent to their radially inner ends and the cover pressing has a large central aperture to provide clearance around the bearing. Thus the same press tools can be used in most of the cover forming operations, except those directly associated with punching out the central aperture.

Similarly, the diaphragm spring 19 can be substantially identical to that used in the conventional clutch, except that the spring fingers 24 are clipped so that they do not extend as far radially inwardly as in the conventional clutch. This gives similar economies of tooling.

## Claims

1. A friction clutch assembly comprising a cover (11) for fastening to a flywheel (12), a pressure plate (16) drivingly connected to the cover and a diaphragm spring (19) acting between the cover and the pressure plate to urge the pressure plate towards the flywheel and, in use, to grip a driven plate (27) interposed between the flywheel and the pressure plate, the pressure plate having thrust receiving means (28) for receiving a release load which acts in opposition to the load of the diaphragm spring to move the pressure plate away from the flywheel to release the driven plate, the diaphragm spring (19) being of the kind comprising an outer Belleville spring portion (23) and spring fingers (24) which project radially inwards from said Belleville portion, characterised in that the diaphragm spring applies its load to the pressure plate (16) adjacent to the radially inner ends of the spring fingers and reacts its load onto the cover (11) adjacent to the radially inner margin of the Belleville spring portion.

2. A friction clutch assembly according to Claim 1, characterised in that the cover (11) has mounting means (14) adjacent to a central aperture for attachment to an input shaft (13).

3. A friction clutch assembly according to Claim 1 or Claim 2, characterised in that said thrust receiving means comprises a thrust plate (28) which is releasably retained in a central aperture in the pressure plate (16).

## Revendications

1. Ensemble constituant embrayage à friction comprenant un couvercle (11) destiné à être fixé à un volant (12), un plateau de pression (16) relié au couvercle pour la transmission de la force et un ressort diaphragme (19) agissant entre le couvercle et le plateau de pression pour tendre à rapprocher le plateau de pression du volant et, en service, serrer un disque entraîne (27), ou disque d'embrayage, interposé entre le volant et le plateau de pression, le plateau de pression présentant des moyens récepteurs de poussée (28) destinés à recevoir un effort de débrayage qui agit en sens inverse de l'effort du ressort diaphragme pour écarter le plateau de pression du volant et libérer le disque entraîné, le ressort diaphragme (19) étant du type comprenant une partie extérieure (23) formant rondelle Belleville et des doigts-ressorts (24) qui font saillie radialement vers l'intérieur à partir de ladite partie formant rondelle Belleville est caractérisé en ce que le ressort diaphragme applique son effort au plateau de pression (16) dans la région adjacente aux extrémités internes dans la direction radiale des pattes de ressorts et prend sa réaction sur le couvercle (11) dans la région adjacente interne dans la direction radiale de la partie formant rondelle Belleville.

2. Ensemble embrayage à friction selon la revendication 1, caractérisé en ce que le couvercle 11 présente des moyens de montage (14) adjacents à une ouverture centrale et destinés à se fixer à un arbre d'entrée (13).

3. Ensemble embrayage à friction selon la revendication 1 ou la revendication 2, caractérisé en ce que lesdits moyens récepteurs de poussée comprennent une plaque de poussée (28) qui est retenue de façon amovible dans une ouverture centrale du plateau de serrage (16).

## Patentansprüche

1. Reibungskupplung mit einem Deckel (11) zur Befestigung an einem Schwungrad (12), einer Druckplatte (16), die mit dem Deckel treibend verbunden ist, und einer Plattenfeder (19), die zwischen dem Deckel und der Druckplatte wirkt, um die Druckplatte gegen das Schwungrad zu drücken und in Betrieb eine angetriebene Platte (27) zu halten, die zwischen dem Schwungrad und der Druckplatte angeordnet ist, wobei die Druckplatte eine Schubaufnahmeeinrichtung (28) zum Aufnehmen einer Ausrückkraft hat, die der Kraft der Plattenfeder entgegenwirkt, um die Druckplatte von dem Schwungrad zum Freigeben der angetriebenen Platte wegzubewegen, wobei die Plattenfeder (19) von der Art ist, die einen äußeren Tellerfederabschnitt (23) und Federfinger (24) hat, die sich von dem Tellerfederabschnitt aus radial nach innen erstrecken, dadurch gekennzeichnet, daß die Plattenfeder ihre Kraft auf die Druckplatte (19) neben den radial inneren Enden der Federfinger aufbringt und ihre Reaktionskraft auf den Deckel (11) neben dem radial inneren Rand des Tellerfederabschnittes abgibt.

2. Reibungskupplung nach Anspruch 1, dadurch gekennzeichnet, daß der Deckel (11) neben einer zentralen Öffnung Befestigungsmittel (14) zur Befestigung an einer Einganswelle (13) hat.

3. Reibungskupplung nach Anspruch 1 oder Anspruch 2, dadurch gekennzeichnet, daß die Schubaufnahmeeinrichtung eine Schubplatte (28) aufweist, die in einer zentralen Öffnung in der Druckplatte (16) lösbar gehalten ist.

0 048 563

FIG.1

0 048 563

~24~

~23~

19

FIG. 2

2